# NEUE EUROPÄISCHE PATENTSCHRIFT

(11) **EP 0 678 544 B2**
(45) Veröffentlichungstag und Bekanntmachung des Hinweises auf die Entscheidung über den Einspruch: **07.04.2004**
(45) Hinweis auf die Patenterteilung: 25.10.2000
(21) Anmeldenummer: 95105583.9
(22) Anmeldetag: 13.04.1995
(51) Int. Cl.: C08J 3/24, C08G 18/10, C08G 59/18

(54) **Zweikomponentige Klebe-, Dichtungs- oder Beschichtungsmasse und deren Verwendung**
Two-component adhesive, sealing or coating composition and its application
Composition à deux composants pour adhésifs, joint d'étanchéité ou revêtement et son application

(30) Priorität: 15.04.1994 CH 114594
(43) Veröffentlichungstag der Anmeldung: 25.10.1995
(73) Patentinhaber: Sika AG, vorm. Kaspar Winkler & Co., CH-8048 Zürich (CH)
(72) Erfinder: Merz, Peter, Dr., CH-8832 Wollerau (CH); Blank, Norman E., Dr., Wayne, N.J. 07470 (US); Tschan, Hans-Peter, CH-5622 Waltenschwil (CH); Wappmann, Reinhard Ernst, CH-5430 Wettingen (CH); Zabel, Lutz, CH-8903 Birmensdorf (CH)
(74) Vertreter: Blum, Rudolf Emil Ernst

(56) Entgegenhaltungen:
- EP-A- 0 153 456
- EP-A- 0 158 893
- EP-A- 0 227 936
- EP-A- 0 281 905
- EP-A- 0 404 315
- EP-B- 0 356 715
- DE-A- 3 840 220
- FR-A- 1 495 559
- US-A- 4 367 313
- US-A- 5 023 298
- DATABASE WPI Week 9207 Derwent Publications Ltd., London, GB; AN 92-053972 & JP-A-04 001 222 (SEKISUI CHEM IND KK) , 6.Januar 1992

## Beschreibung

Es wird eine zweikomponentige Klebe-, Dichtungs- oder Beschichtungsmasse beschrieben, welche getrennt abgepackt, lagerbeständig ist, und bei Vermischung der beiden Komponenten härtet.

### HINTERGRUND DER ERFINDUNG

Zweikomponentige Klebe-, Dichtungs- oder Beschichtungsmassen sind seit langem bekannt. Sie bestehen, getrennt abgepackt, aus einer Harzkomponente mit reaktiven Gruppen, beispielsweise Epoxidgruppen, und einer Härterkomponente. Unmittelbar vor der Verwendung werden die beiden Komponenten miteinander vermischt und sofort danach (innerhalb der "offenen Zeit") wird die Mischung auf das entsprechende Substrat aufgetragen und härtet dort aus.

Ein wesentlicher Nachteil dieser Zweikomponentensysteme besteht darin, dass die Mischung der beiden Komponenten vom Verwender durchgeführt wird und dass ein ungenaues Mischungsverhältnis aus den beiden Komponenten zu einer Verschlechterung der Festigkeit der ausgehärteten Klebe- Dichtungs- oder Beschichtungsmasse führt.

Falls die Harzkomponente solche reaktiven Gruppen enthält, die bei Kontakt mit dem Härter zu einer raschen Aushärtung führen, Jedoch auch mit Wasser, beispielsweise der Feuchtigkeit der Umgebung, langsam vollständig durchhärten, dann ist es nicht sehr kritisch, wenn bei einer ungenauen Mischung ein Unterschuss des Härters vorliegt, weil allmählich dennoch eine vollständige Härtung der Harzkomponente erfolgt.

Wesentlich kritischer ist es jedoch, wenn bei der Verwendung mehr Härter zugemischt wird, als für die vollständige Aushärtung der Harzkomponente erforderlich ist. In diesem Falle bleibt nach der vollständigen Aushärtung der Harzkomponente als "Fremdbestandteil" der Ueberschuss des Härters in der Mischung enthalten, und dies führt zu einer drastischen Verschlechterung der mechanischen Eigenschaften der ausgehärteten Masse. Entsprechende Massen, die bei genauer Einhaltung des vom Produzenten vorgegebenen Mischungsverhältnisses aus Harzkomponente und Härterkomponente sehr gute mechanische Eigenschaften aufweisen, zeigen völlig unbefriedigende Werte, falls der Verwender bei der Herstellung der Mischung eine grössere Menge des Härters zusetzt, als für die vollständige Härtung erforderlich.

Des weiteren ist es bei den bisher bekannten zweikomponentigen Klebe- Dichtungs- und Beschichtungsmassen wichtig, dass bei der Verwendung eine gleichmässige und homogene Vermischung der Harzkomponente mit der Härterkomponente durchgeführt wird, denn andernfalls weist die ausgehärtete Klebe- Dichtungs- oder Beschichtungsmasse auch bei Einsatz des korrekten Mischungsverhältnisses zwischen Harzkomponente und Härterkomponente Stellen mit einem zu geringen Gehalt und Stellen mit einem zu hohen Gehalt der Härterkomponente auf, und dies führt zu den bereits beschriebenen Problemen bezüglich der Verringerung der mechanischen Eigenschaften der ausgehärteten Masse.

Aus den oben erwähnten Gründen haben sich in den letzten Jahren einkomponentige Klebe-Dichtungs- oder Beschichtungsmassen immer mehr durchgesetzt. Diese einkomponentigen Klebe-, Dichtungs- oder Beschichtungsmassen weisen eine Harzkomponente mit reaktiven Gruppen auf, die bei Einwirkung der Luftfeuchtigkeit bei Umgebungstemperatur aushärten oder diese einkomponentigen Massen enthalten zusätzlich eine blockierte Härterkomponente, die schon vom Erzeuger homogen und unter Einhaltung der exakten Mischungsverhältnisse in die Harzkomponente eingemischt wird. Die entsprechenden einkomponentigen Produkte sind bei Zimmertemperatur lagerstabil und härten erst dann aus, sobald die Klebestelle auf die Ansprechtemperatur des Härters erhitzt wird.

Eine Erhitzung der Klebestelle ist jedoch in vielen Anwendungsgebieten unerwünscht oder sogar unmöglich, und deshalb ist in vielen Anwendungsgebieten nur der Einsatz von solchen einkomponentigen Systemen möglich, die nach der Auftragung ausschliesslich durch die Einwirkung von Wasser, beispielsweise Luftfeuchtigkeit der Umgebung, härten.

Diese Systeme besitzen jedoch den Nachteil, dass für die Durchhärtung lange Härtungszeiten erforderlich sind, und unmittelbar nach der Zusammenfügung der zu verklebenden Substrate die Haftfestigkeit so gering ist, dass eine Fixierung der zu verbindenden Teile unbedingt erforderlich ist. Dies ist bei vielen Anwendungsgebieten, beispielsweise im Bau von Kraftfahrzeugen, wie Automobilen und Bussen, im Schiffsbau und auch im Baugewerbe, beispielsweise im Hausbau, äusserst unerwünscht, beispielsweise dann, wenn die entsprechenden einkomponentigen Klebe-, Dichtungs- oder Beschichtungsmassen zur Verklebung von Windschutzscheiben oder zur Verklebung einer Gebäudeverglasung eingesetzt werden.

Ein weiterer Nachteil besteht darin, dass die Geschwindigkeit der Aushärtung von der verfügbaren Luftfeuchtigkeit abhängt, und bei kühlen Umgebungstemperaturen und geringer Luftfeuchtigkeit kann es mehrere Wochen dauern, bis eine vollständige Durchhärtung erreicht ist.

Da die Durchhärtung durch Einwirkung der Luftfeuchtigkeit von aussen nach innen erfolgt, ist sie ferner von der Diffusion des eintretenden Wassers in die Schicht des Klebemittels abhängig, und dicke Klebemittelschichten härten sehr langsam aus, und ferner auch solche Klebemittelschichten, in denen grosse Flächen an Substraten miteinander verbunden werden, weil in den inneren Bereichen der zur verklebenden Flächen das Eintreten der Feuchtigkeit stark behindert wird.

Aufgrund dieser Schwierigkeiten sind bisher bekannte einkomponentige Klebe- Dichtungs- oder Beschichtungsmassen in vielen Einsatzgebieten oder unter speziellen Umweltbedingungen absolut ungeeignet, und es muss dann auf die zweikomponentigen Systeme trotz der oben erwähnten Nachteile bei der Anwendung zurückgegriffen werden.

Ziel der vorliegenden Erfindung war es, eine zweikomponentige Klebe-, Dichtungs-, oder Beschichtungsmasse zu entwickeln, in welcher die beiden Komponenten getrennt voneinander abgepackt sind und lagerbeständig sind, wobei dann, wenn die Komponenten miteinander in Berührung kommen, das Mischungsverhältnis zwischen der Harzkomponente und der Härterkomponente nicht kritisch ist, weil die Harzkomponente auch bei Abwesenheit der Härterkomponente durch Luftfeuchtigkeit aushärtet, und weil die Härter-komponente selbst bei Einwirkung der Luftfeuchtigkeit ebenfalls zu einer festen Masse aushärtet.

### BESCHREIBUNG DES STANDES DER TECHNIK

In der europäischen Patentanmeldung 153 456 wird eine chemisch härtende Zweikomponentenmasse auf Basis von Polyurethanen beschrieben, wobei
die erste Komponente das Umsetzungsprodukt aus einem Prepolymer mit Isocyanargruppen mit einer reaktiven Verbindung enthält, welche zwei Wasserstoff enthaltende Molekülgruppen aufweist, die eine unterschiedliche Reaktivität gegenüber den Isocyanatgruppen besitzen. Diese zwei Wasserstoffatome enthaltende reaktive Verbindung kann beispielsweise ein Thioalkohol sein, wie zum Beispiel das 2-Mercaptoäthanol. Wie aus dem Anspruch 11 und der Beschreibung ersichtlich ist, muss bei der Herstellung der zweiten Komponente, das als Ausgangsmaterial eingesetzte Prepolymer zwar freie Isocyanatgruppen aufweisen, jedoch muss die zwei unterschiedliche reaktive Wasserstoffatome aufweisende Verbindung in einem solchen Ueberschuss eingesetzt werden, dass dann die zweite Komponente keine vernetzbaren Isocyanatgruppen mehr aufweist, sondern nurmehr die reaktiven Wasserstoffatome, die zur Vernetzung der ersten Komponente benötigt werden. Auch aus den speziellen Angaben auf Seite 10, letzter Abschnitt, ist ersichtlich, dass auch dann, wenn nur 0,8 Aequivalente an der zwei reaktive Gruppen im Molekül aufweisenden Verbindung pro Isocyanatfunktion eingesetzt werden, in der Härterkomponente dann dennoch ein Ueberschuss, nämlich 1,6 Mole der reaktiven Wasserstoffatome pro Mol der Isocyanatfunktion vorliegen müssen. Auch aus Beispiel 1, nämlich Seite 14, vorletzter Absatz, ist ersichtlich, dass die Umsetzung der zweiten Komponente so durchgeführt werden muss, dass dieses Produkt im Infrarotspektrum keine freien Isocyanatgruppen mehr erkennen lässt.

Somit weist die Härterkomponente der dort beschriebenen Produkte keine Gruppierungen auf, die bei einem Ueberschuss der Härterkomponente zu einer Vernetzung derselben durch die Luftfeuchtigkeit der Umgebung führen könnten.

In der US Patentschrift 4,367,313 werden "one pot" feuchtigkeitshärtende Beschichtungszusammensetzungen beschrieben, die zweikomponentig sind, wobei die erste Komponente mindestens eine Isocyanatgruppe und mindestens eine hydrolysierbare Alkoxysilangruppe enthält, und die zweite Komponente ein Polymer ist, welches eine Vielzahl von Oxazolidingruppen aufweist. Aus Spalte 6, Zeilen 45 bis 54 ist jedoch ersichtlich, dass die dort beschriebenen "one pot" Systeme nach dem Vermischen der beiden Komponenten so lange stabil bleiben, bis Feuchtigkeit hinzutritt, die dann aus der zweiten Komponente durch Hydrolyse der Oxazolidingruppen, die für die Härtung nötige Hydroxylgruppen, beziehungsweise Aminogruppen liefert. Somit ist nach der Vermischung der beiden Komponenten zwar die Lagerbeständigkeit der Mischung nur gering, diese Mischung verhält sich jedoch ansonsten analog wie eine einkomponentige feuchtigkeitshärtende Beschichtungsmasse, und die Aushärtung dieser Mischung erfolgt daher nur an denjenigen Stellen ausreichend rasch, die mit der Luftfeuchtigkeit in Berührung kommen. Aus diesem Grunde weisen bei Applikation dickerer Schichten der Mischung die entsprechenden Massen auch keine befriedigend rasche Aushärtung auf, und sie sind daher nur zur Herstellung von relativ dünnen Beschichtungen empfohlen, bei welchen die Aushärtung durch den Zugang der Luftfeuchtigkeit gewährleistet ist.

In der japanischen Patentveröffentlichung 4,001,222 (siehe das Abstract derselben in DATABASE WPI, Week 9207, Derwent Publications Ltd., London, GB; AN 92-053972), wird eine kalthärtende Zusammensetzung beschrieben, welche die folgenden Komponenten enthalten muss:
A - ein organisches Polymer mit endständigen Methoxysilylgruppen,
B - ein Epoxyharz,
C - einen Härtungskatalysator für Epoxy und
D - einen Härtungskatalysator für das organische Polymer mit Methoxysilylgruppen, der eine organische Zinnverbindung darstellt.

Dieses Produkt ist zweikomponentig abgepackt, wobei die eine Komponente das Polymer A mit endständigen Methoxysilylgruppen und den Härtungskatalysator für Epoxy enthält, und die zweite Komponente eine Mischung aus dem Epoxyharz B und dem Härtungskatalysator D darstellt.

Wenn in diesem Falle die beiden Komponenten nicht homogen vermischt werden, dann erfolgt durch die Luftfeuchtigkeit der Umgebung zwar allmählich eine vollständige Aushärtung der Komponente, in der das Polymer mit den endständigen Methoxysilylgruppen enthalten ist, jedoch ist die zweite Komponente durch Luftfeuchtigkeit nicht aushärtbar, weil Epoxyharze durch Wasser allein nicht härtbar sind, und somit bei Fehlen des Härtungskatalysators für Epoxy diese Stellen ungehärtet bleiben. Somit haben diese zweikomponentigen Systeme bei ungenauen Mischungsverhältnissen die weiter vorne angesprochenen Nachteile.

Des weiteren sind auch bereits solche zweikomponentigen Klebe-, Dichtungs- und Beschichtungsmassen bekannt, in welchen die Harzkomponente reaktive Gruppen aufweist, die bei Abwesenheit der Härterkomponente durch Luftfeuchtigkeit aushärten, und die zweite Komponente eine Mischung aus einem Feststoff und einem flüchtigen Härter darstellt, wobei als flüchtiger Härter, dessen allfälliger Ueberschuss allmählich abdampft, vorzugsweise Wasser verwendet wird.

In der britischen Patentschrift 1,104,831 wird bereits eine zweikomponentige Abdichtungsmasse beschrieben, in welcher der Teil A ein flüssiges Prepolymer mit bis zu 2,5 Gew.-% an endständigen Isocyanatgruppen enthält, und der Teil B einen fein verteilten mineralischen Füllstoff, insbesondere fein verteilte Kieselsäure, sowie ein inertes flüssiges Verdünnungsmittel, welches einen geringen Wassergehalt aufweist und einen Katalysator für die Reaktion zwischen dem Wasser und den Isocyanatgruppen des Teils A enthält. Bei der Verwendung dieser zweikomponentigen Mischung werden etwa gleiche Gewichtsteile der Komponenten A und B miteinander vermischt, und es wird noch zusätzlich mindestens so viel Wasser zugemischt, dass alle im Teil A vorhandenen freien Isocyanatgruppen mit dem Wasser umgesetzt werden.

Ein Nachteil von solchen zweikomponentigen Gemischen, in welchen eine Komponente, die freie Isocyanatgruppen aufweist, mit einer Komponente vermischt wird, die einen Füllstoff und Wasser enthält, besteht darin, dass bei der Reaktion des Wassers mit den Isocyanatgruppen Kohlendioxyd in einer solchen Menge und mit einer solchen Geschwindigkeit abgespaltet wird, dass sich dadurch in der aushärtenden Masse Bläschen bilden.

Gemäss der deutschen Offenlegungsschrift 3,840,220 wird die Lösung dieses Problems dadurch versucht, dass man in der Komponente B das Wasser in gebundener Form einsetzt, und zwar entweder chemisch gebunden in Form eines Kristallwassers an anorganische Oxyde, Hydroxyde oder andere wasserhaltige Salze, oder auch in Form von wasserbeladenen Molekularsieben, Cellulose-, beziehungsweise Stärkederivaten oder organischen Polymeren, wie Polyamiden.

In der US Patentschrift 4,469,857 wird eine Zweikomponentenzusammensetzung beschrieben, in welcher die eine Komponente eine Mischung aus einer Verbindung mit freien Isocyanatgruppen und einem verkappten Härter auf Basis eines Enamines darstellt, und die zweite Komponente Wasser enthält, das an ein Trägermaterial gebunden ist, vorzugsweise in Form eines Hydrates an eine anorganische Verbindung oder als Hydrogel auf Basis von Siliciumdioxyd enthaltenden Produkten oder Polysacchariden.

Auch in der deutschen Offenlegungsschrift 4,028,704 und im entsprechenden US Patent 5,194,488 wird eine zweikomponentige Dichtungsmasse beschrieben, in welcher die Komponente A ein Polyurethan mit freien Isocyanatgruppen und einen durch Wasser freisetzbaren blockierten Härter enthält, und die Komponente B eine Wasserpaste darstellt, in welcher das Wasser reversibel an eine Trägersubstanz gebunden ist, vorzugsweise an fein verteilte Cellulose, Stärke oder Korkmehl. Vorzugsweise besteht die Komponente B aus einer inerten viskosen Flüssigkeit, welche die wasserbeladene Trägersubstanz enthält.

In all diesen bisher beschriebenen zweikomponentigen Systemen enthält die Komponente A zusätzlich zu dem Polymer mit freien Isocyanatgruppen noch einen latenten Härter, der bei Kontakt mit dem in der Komponente B enthaltenen Wasser freigesetzt wird und mit den Isocyanatgruppen reagiert. Es zeigte sich jedoch, dass auch die zweikomponentigen Systeme der jüngsten Entwicklungen auf diesem Gebiet immer noch das Problem der Bläschenbildung während des Härtungsvorganges aufwiesen, sobald nämlich die wasserhaltige Komponente mit der die freien Isocyanatgruppen und den latenten Härter enthaltenden Harzkomponente vermischt wurde.

Ziel der vorliegenden Erfindung war es, zweikomponentige Klebe-, Dichtungs- und Beschichtungsmassen zu entwickeln, in welchen sowohl die Harzkomponente als auch die Härterkomporrente in der Lage ist, allmählich durch die Einwirkung der Luftfeuchtigkeit zu einer festen Masse auszuhärten.

### BESCHREIBUNG DER ERFINDUNG

Ein Gegenstand der vorliegenden Erfindung ist daher eine zweikomponentige Klebe-, Dichtungsoder Beschichtungsmasse, die frei von solchen Feststoffkomponenten ist, die eine ionenaustauschende Wirkung besitzen, wie zum Beispiel Molekularsiebe, wobei diese Masse, getrennt abgepackt, die Komponente A und die Komponente B umfasst, die, getrennt voneinander, lagerbeständig sind, jedoch bei einem Kontakt der Komponente A mit der Komponente B eine Härtung der Masse erfolgt, die Komponente A mindestens einen Bestandteil enthält, der reaktive Gruppen aufweist, die zu einer Vernetzung der Komponente A führen, sobald diese mit mindestens einem Bestandteil der Komponente B und/oder mit Wasser in Berührung kommt,
dadurch gekennzeichnet, dass
die Komponente B den Bestandteil enthält, der die Vernetzung der Komponente A bewirkt und ausserdem mindestens einen Bestandteil enthält, der reaktive Gruppen aufweist, die zu einer Vernetzung der Komponente B führen sobald diese mit Wasser oder gegebenenfalls mit einem Bestandteil in Berührung kommen der in der Komponente A enthalten ist und wobei
die reaktiven Gruppen des mindestens einen Bestandteil der Komponente A selbst zu einer Vernetzung der Komponente A führen, sobald diese Gruppen mit Wasser in Berührung kommen oder
dass die reaktiven Gruppen des mindestens einen Bestandteil der Komponente A selbst nicht in der Lage sind, mit Wasser die Vernetzungsreaktion zu bewirken, wobei jedoch in der Komponente A zusätzlich ein latenter Härter enthalten ist, der bei Kontakt mit Wasser aktiviert wird, beispielsweise durch Freisetzung eines entsprechenden Härters, und wobei der aktivierte oder freigesetzte Härter durch Reaktion mit den reaktiven Gruppen des Bestandteils zu einer Vernetzung der Komponente A führt und dass in der Komponente B ebenfalls die reaktiven Gruppen des entsprechenden Bestandteils zu einer Vernetzung der Komponente B führen, sobald diese reaktiven Gruppen mit Wasser in Berührung kommen oder dass die reaktiven Gruppen der Komponente B selbst auch zu keiner Vernetzungsreaktion befähigt sind, sobald sie mit Wasser in Berührung kommen, wobei dann in der Komponente B ebenfalls zusätzlich ein latenter Härter anwesend ist, der bei Kontakt mit Wasser aktiviert wird und somit zur Reaktion mit den reaktiven Gruppen des Bestandteils der Komponente B befähigt ist und dadurch zu der Vernetzung der Komponente B führt und dass
das Wasser, welches die Vernetzung der Komponente A und die Vernetzung der Komponente B bewirkt, die Feuchtigkeit der Umgebung ist.

Spezielle Ausführungsformen sind in den abhängigen Ansprüchen definiert.

Bei den erfindungsgemässen zweikomponentigen Klebe-, Dichtungs- oder Beschichtungsmassen besteht der Vorteil im Vergleich zu bisher bekannten zweikomponentigen Systemen darin, dass bei nicht genauer Einhaltung des optimalen Mischungsverhältnisses der Komponente A mit der Komponente B, beziehungsweise bei einer nicht homogenen Vermischung der Komponente A mit der Komponente B in der gehärteten Masse, keine Bestandteile zurückbleiben, die selbst zu keiner Härtung befähigt sind, und die dadurch die Festigkeit der Klebestelle schwächen.

Wie bereits erwähnt wurde, muss die Komponente A mindestens einen Bestandteil enthalten, der reaktive Gruppen aufweist, die zu einer Vernetzung der Komponente A führen, sobald diese mit mindestens einem Bestandteil in Berührung kommen, der in der Komponente B enthalten ist, und die Vernetzung der Komponente A erfolgt auch dann, wenn sie mit Wasser in Berührung kommt. Somit erfolgt eine rasche Härtung der Komponente A in denjenigen Bereichen, in denen sie mit einer ausreichenden Menge des die Vernetzung der Komponente A bewirkenden Bestandteils in Berührung kommt, der in der Komponente B enthalten ist. In denjenigen Bereichen der Komponente A, in denen der in der Komponente B enthaltene, die Vernetzung der Komponente A bewirkende Bestandteil nicht in ausreichenden Mengen vorhanden ist, erfolgt die allmähliche Aushärtung der Komponente A trotzdem, weil das Wasser der Umgebung, beispielsweise die Luftfeuchtigkeit, eine vollständige Aushärtung der Komponente A herbeiführt.

Dabei ist es möglich, dass die reaktiven Gruppen, die in dem mindestens einen Bestandteil der Komponente A vorhanden sind, selbst zu einer Vernetzung der Komponente A führen, sobald diese Gruppen mit dem in der Komponente B enthaltenen, für die Vernetzung erforderlichen Bestandteil und/oder dem Wasser in Berührung kommen. Es ist jedoch auch möglich, dass die reaktiven Gruppen des mindestens einen Bestandteils der Komponente A selbst nicht in der Lage sind, bei Kontakt mit Wasser, bzw. dem die Härtung der Komponente A bewirkenden Bestandteil der Komponente B die Vernetzungsreaktion der Komponente A zu bewirken. In diesem Fall muss dann in der Komponente A ein weiterer Bestandteil enthalten sein, beispielsweise ein latenter Härter, der aktiviert wird, sobald die Komponente A mit dem in der Komponente B enthaltenen Bestandteil, beziehungsweise mit dem Wasser der Umgebung, in Berührung kommt.

In beiden der genannten Ausführungsarten wird eine rasche Härtung der Komponente A bewirkt, sobald sie mit einer ausreichenden Menge des entsprechenden Bestandteils in Berührung kommt, der in der Komponente B enthalten ist. Es wird jedoch auch eine vollständige Aushärtung der Komponente A durch die Einwirkung des Wassers der Umgebung erreicht.

In den erfindungsgemässen zweikomponentigen Klebe-, Dichtungs- oder Beschichtungsmassen enthält die Komponente B sowohl den Bestandteil, der die Vernetzung der Komponente A bewirkt, als auch mindestens einen Bestandteil, der reaktive Gruppen aufweist, die zu einer Vernetzung der Komponente B führen, sobald diese mit Wasser in Berührung kommen oder gegebenenfalls einem Bestandteil in Berührung kommen, der in der Komponente A enthalten ist. Auch in diesem Falle, kann die Komponente B reaktive Gruppen enthalten, die selbst zu einer Vernetzung der Komponente B führen, sobald diese mit Wasser in Berührung kommt, und allenfalls mit dem gegebenenfalls zusätzlich in der Komponente A enthaltenen Bestandteil, der die Vernetzung dieser reaktiven Gruppen der Komponente B herbeiführt. Die reaktiven Gruppen der Komponente B können jedoch selbst allenfalls zu keiner Vernetzungsreaktion befähigt sein, sobald sie mit Wasser in Berührung kommen. In diesem Fall muss aber dann in der Komponente B zusätzlich ein latenter Härter anwesend sein, der bei Kontakt mit Wasser aktiviert wird, beispielsweise der Härter freigesetzt wird, der zur Reaktion der reaktiven Gruppen des Bestandteils der Komponente B befähig ist, und somit zu einer Vernetzung der Komponente B führt, sobald diese mit dem Wasser der Umgebung in Berührung kommt.

In gleicher Weise muss ein allenfalls in der Komponente A zusätzlich enthaltender Bestandteil, beispielsweise ein Härter oder latenter Härter, der zu einer Härtung der reaktiven Gruppen des entsprechenden Bestandteils der Komponente B führt, entweder direkt die Vernetzung dieser Gruppen der Komponente B bewirken, oder es muss in der Komponente B ein zusätzlicher Bestandteil enthalten sein, beispielsweise eine Verbindung, die zu einer Aushärtung der Komponente B führt, sobald diese mit dem in der Komponente A enthaltenen zusätzlichen Bestandteil in Berührung kommt. So kann beispielsweise die Komponente A einen Bestandteil enthalten, der einen in der Komponente B enthaltenen latenten Härter aktiviert, beispielsweise durch Freisetzung des Härters für die Komponente B.

In speziellen Ausführungsformen ist der in der Komponente B enthaltene Bestandteil, der zu einer Vernetzung des reaktive Gruppen aufweisenden Bestandteils der Komponente A beim Kontakt der Komponente A mit der Komponente B führt, ein Härter oder ein latenter Härter für die reaktiven Gruppen der Komponente A, oder dieser in der Komponente B enthaltene Bestandteil stellt einen Aktivator für einen in der Komponente A enthaltenen Bestandteil, beispielsweise einen latenten Härter dar, wobei die Komponente A gegebenenfalls ebenfalls einen Härter oder latenten Härter für die reaktiven Gruppen des entsprechenden Bestandteils der Komponente B oder einen Aktivator für einen in der Komponente B oder einen Aktivator für einen in der Komponente B anwesenden Bestandteil enthält, so dass eine Vernetzung der Komponente B stattfindet, sobald diese mit der Komponente A in Berührung kommt.

Die Komponente A und/oder die Komponente B kann eine spezielle Verbindung enthalten, beispielsweise einen Katalysator, die allein, in Zusammenwirkung mit dem Wasser der Umgebung, in Zusammenwirkung mit einem Härter oder einem latenten Härter und/oder in Zusammenwirkung mit einer weiteren speziellen Verbindung, die in der anderen Komponente enthalten ist, zu einer Vernetzung, beziehungsweise Selbstvernetzung der reaktiven Gruppen des diese Gruppen aufweisenden Bestandteils der anderen der beiden genannten Komponenten A und B führt. Beispielsweise kann die eine der beiden Komponenten A oder B eine Zinnverbindung enthalten und die andere der beiden Komponenten ein Amin, wobei bei der Vermischung der beiden Komponenten die Zinnverbindung mit dem Amin unter Ausbildung eines hochreaktiven Urethankatalysators reagiert. So kann zum Beispiel die Komponente A als reaktive Gruppen Isocyanatgruppen enthalten und ferner den Zinnkatalysator und die Komponente B solche reaktiven Gruppen enthalten, die durch Amine nicht vernetzbar sind und ausserdem das Amin.

Gemäss einer weiteren bevorzugten Ausführungsart der zweikomponentigen Klebe-, Dichtungsoder Beschichtungsmassen auf Basis einer vernetzbaren Komponente A und einer ebenfalls vernetzbaren Komponente B enthält die Komponente A, beziehungsweise die Komponente B, reaktive Gruppen, welche Isocyanatgruppen, blockierte Isocyanatgruppen, Silangruppen, Säureanhydridgruppen oder Epoxygruppen, kombiniert mit einem durch Wasser aktivierbaren Härter für Epoxy sein können. Allenfalls kann auch in der Komponente A, beziehungsweise in der Komponente B, eine Kombination aus zwei oder mehr derartigen vernetzbaren Gruppierungen vorliegen.

In der Folge werden spezielle Varianten angeführt, in welchen die die Vernetzung der Komponente A bewirkenden reaktiven Gruppen, beziehungsweise die Vernetzung der Komponente B bewirkenden reaktiven Gruppen aus den erwähnten reaktiven Gruppen ausgewählt sind:

Die Komponente A enthält einen Bestandteil, der freie Isocyanatgruppen aufweist, wobei dieser Bestandteil vorzugsweise ein Polyurethan mit endständigen, an aliphatische Reste oder aromatische Reste gebundenen Isocyanatgruppe ist, und die Komponente B enthält als reaktive Gruppen Silangruppen und ausserdem eine Verbindung, welche die reaktiven Wasserstoffatome liefert, die bei dem Kontakt der Komponente A mit der Komponente B die Vernetzung der Komponente A durch Reaktion der in ihnen enthaltenen freien Isocyanatgruppen mit den reaktiven Wasserstoffatomen der Komponente B bewirkt. In diesem Fall ist die reaktive Wasserstoffatome liefernde Verbindung der Komponente B vorzugsweise ein primäres oder sekundäres Amin oder eine freie Hydroxylgruppen aufweisende Verbindung. Ferner sind die in der Komponente B enthaltenen reaktiven Gruppen Silangruppen, vorzugsweise endständige Silangruppen, die an ein Copolymerisat gebunden sind, vorzugsweise ein entsprechendes Polyurethan. Bei dieser Ausführungsart kann gegebenenfalls in der Komponente A zusätzlich ein Bestandteil enthalten sein, beispielsweise ein Härter oder ein Aktivator, der zu einer Vernetzung der Komponente B aufgrund der Reaktion der Silangruppen mit diesem Bestandteil oder der Reaktion eines in der Komponente B enthaltenen latenten Härters mit diesem Bestandteil der Komponente A führt.

Die Komponente A enthält einen Bestandteil, der freie Isocyanatgruppen aufweist und der vorzugsweise ein Polyurethan mit endständigen, an aliphatische Reste oder aromatische Reste gebundenen Isocyanatgruppen ist, und in dieser Komponente A ist ausserdem eine spezielle Verbindung (1), beispielsweise ein Katalysator (1), enthalten, und die Komponente B enthält ebenfalls einen Bestandteil, der freie Isocyanatgruppen aufweist und vorzugsweise ein Polyurethan mit endständigen, an aliphatische Reste oder aromatische Reste gebundenen Isocyanatgruppen ist und zusätzlich eine spezielle Verbindung (2), beispielsweise einen Katalysator (2). In diesem Fall reagiert bei Kontakt der Komponente A mit der Komponente B die spezielle Verbindung (1) mit der speziellen Verbindung (2) zu einem hochreaktiven Bestandteil, der die Vernetzung des freie Isocyanatgruppen aufweisenden Bestandteils der Komponente A und die Vernetzung des freie Isocyanatgruppen aufweisenden Bestandteils der Komponente B bewirkt. Wenn die spezielle Verbindung (1) ein Katalysator (1) ist und die spezielle Verbindung (2) ein Katalysator (2) ist, dann kann beispielsweise der Katalysator (1) mit dem Katalysator (2) zu einem hochreaktiven Trimerisierungskatalysator reagieren.

Auch gemäss der nachfolgend geschilderten Ausführungsart enthält sowohl die Komponente A als auch die Komponente B einen Bestandteil, der freie Isocyanatgruppen aufweist. Gemäss dieser Variante müssen jedoch die in der Komponente A enthaltenen freien Isocyanatgruppen eine geringere Reaktivität besitzen als die in der Komponente B enthaltenen freien Isocyanatgruppen, und der entsprechende Bestandteil der Komponente A ist vorzugsweise ein Polyurethan mit endständigen, an aliphatische Reste gebundenen Isocyanatgruppen, während der entsprechende Bestandteil der Komponente B vorzugsweise ein Polyurethan mit endständigen, an aromatische Reste gebundenen Isocyanatgruppen darstellt. In diesem Falle muss die Komponente A zusätzlich einen latenten Härter enthalten, beispielsweise ein Aldimin, ein Ketimin oder ein Oxazolidin, wobei dieser latente Härter bei Kontakt mit einer speziellen Verbindung, die in der Komponente B enthalten ist, aktiviert wird, und bei dieser Ausführungsart muss dementsprechend die Komponente B zusätzlich die spezielle Verbindung enthalten, welche zur Aktivierung des Härters in der Komponente A erforderlich ist, so dass bei Kontakt der Komponente A mit der Komponente B die Komponente A vernetzt wird, und ausserdem eine Vernetzung sowohl der Komponente A als auch der Komponente B erfolgt, sobald diese Komponenten mit Wasser in Berührung kommen.

Gemäss einer weiteren speziellen Ausführungsart enthält die Komponente A ebenfalls einen Bestandteil, der freie Isocyanatgruppen aufweist, und der vorzugsweise ein Polyurethan mit endständigen, an aliphatische Reste oder aromatische Reste gebundenen Isocyanatgruppen ist, und die Komponente B enthält als reaktive Gruppen Epoxidgruppen, und sie enthält ferner Hydroxylgruppen, welche die Vernetzung der freien Isocyanatgruppen des entsprechenden Bestandteils der Komponente A bewirken, wobei die Komponente B vorzugsweise ein Hydroxygruppen enthaltendes Epoxidharz ist. In diesem Fall muss die Komponente B jedoch zusätzlich einen latenten Härter enthalten, der zu einer Vernetzung des Bestandteils führt, der die freien Epoxidgruppen enthält, sobald dieser latente Härter mit Wasser in Berührung kommt. Des weiteren ist es vorteilhaft, wenn die Komponente A zusätzlich einen Beschleuniger oder Aktivator für den in der Komponente B vorhandenen latenten Härter für die Vernetzung des die Epoxidgruppen enthaltenden Bestandteils enthält, so dass bei Kontakt der Komponente A mit der Komponente B eine Härtung der Komponente A erfolgt, und allenfalls auch die Härtung der Komponente B durch den in der Komponente A enthaltenen Beschleuniger erfolgt, und wobei bei Kontakt der Komponente A und bei Kontakt der Komponente B mit Wasser, sowohl eine Härtung der Komponente A als auch eine Härtung der Komponente B erfolgt.

Ein bevorzugtes Beispiel für einen latenten Härter, der zu einer Vernetzung der Epoxidgruppen führt, sobald dieser latente Härter mit Wasser in Berührung kommt, ist ein Aldimin, ein Ketimin oder ein Oxazolidin. Diese latenten Härter werden auch durch den Beschleuniger aktiviert, der gegebenenfalls zusätzlich in der Komponente A enthalten sein kann.

In der nachfolgend beschriebenen Variante ist in der Komponente B ein Bestandteil enthalten, der als reaktive Gruppen Epoxidgruppen aufweist, und ferner ein latenter Härter, der zu einer Vernetzung des Epoxidgruppen enthaltenden Bestandteils führt, sobald diesermit Wasser in Berührung kommt, und auch in diesem Fall ist der in der Komponente B enthaltene latente Härter vorzugsweise ein Aldimin, Ketimin oder Oxazolidin. Bei dieser Variante enthält jedoch die Komponente A einen Bestandteil, der als reaktive Gruppen Silangruppen aufweist, und die Komponente A enthält gegebenenfalls ausserdem einen Bestandteil, der als Beschleuniger für den latenten Härter wirkt, der in der Komponente B enthalten ist, wobei dieser Beschleuniger beispielsweise eine Verbindung sein kann, die Aminogruppen und/oder Hydroxygruppen in ihrem Molekül enthält. Auch bei dieser Variante des erfindungsgemässen zweikomponentigen Klebe-, Dichtungs- oder Beschichtungsmasse, erfolgt bei Kontakt der Komponente A mit der Komponente B eine Härtung der Komponente A und gegebenenfalls auch eine Härtung der Komponente B durch den in der Komponente A enthaltenen Aktivator für den in der Komponente B enthaltenen latenten Härter. Bei Kontakt mit Wasser erfolgt sowohl eine Härtung der Komponente A als auch eine Härtung der Komponent B, weil eben auch hier das Wasser aus dem in der Komponente B enthaltenen latenten Härter den entsprechenden Härterfür die reaktiven Epoxidgruppen der Komponente B freisetzt.

Aehnlich der oben beschriebenen Variante, ist schliesslich die folgende Kombination aus Komponente A und Komponente B aufgebaut, nur ist in diesem Fall jetzt die Komponente A diejenige, die einen Bestandteil enthält, der als reaktive Gruppen Epoxidgruppen aufweist, und diese Komponente A muss ferner einen latenten Härter enthalten, der zu einer Vernetzung des die Epoxidgruppen enthaltenden Bestandteils führt, sobald dieser latente Härter mit Wasser oder mit einem in der Komponente B enthaltenen Aktivator oder Beschleuniger für den in der Komponente A enthaltenen latenten Härter in Berührung kommt. In diesem Fall enthält dann die Komponente B einen Bestandteil, der als reaktive Gruppen Silangruppen trägt und ferner den Aktivator oder Beschleuniger für den in der Komponente A enthaltenen latenten Härter. Auch in diesem Fall erfolgt bei Kontakt der Komponente A mit der Komponente B die Härtung der Komponente A, und bei Kontakt mit Wasser erfolgt sowohl eine Härtung der Komponente A als auch eine Härtung der Komponente B.

Die aus den Komponenten A und B aufgebauten zweikomponentigen Klebe-, Dichtungsoder Beschichtungsmassen können zusätzlich noch weitere Bestandteile enthalten, durch welche die Eigenschaften der Massen bei der Verwendung und/oder die Eigenschaften der mit diesen Massen hergestellten Verklebung, Abdichtung oder Beschichtung in besonders vorteilhafter Weise den gestellten Anforderungen angepasst wird.

Gemäss einer bevorzugten Ausführungsart der erfindungsgemässen zweikomponentigen Klebe-, Dichtungs- oder Beschichtungsmassen enthält die Komponente A und/oder die Komponente B mindestens einen Bestandteil, der aus der Gruppe von Materialien ausgewählt ist, welche die folgenden Komponenten umfasst:
Bindemittel, vorzugsweise Polymermaterialien, Weichmacher,
Füllstoffe, vorzugsweise Kieselsäurederivate, Gips, Talkum, Metallpulver, Kreide, Kaoline, Aktivkohle oder Russ, sowie organische Füllstoffe, beispielsweise Polyvinylchlorid,
Thixotropiermittel, vorzugsweise Bentone, Russ, Kieselsäurederivate, gefällte Kreiden, Polyvinylchlorid, Harnstoffderivate oder Acrylderivate, Farbstoffe und/oder Pigmente, und
weitere Zusätze, welche die Anwendungseigenschaften, die Haltbarkeit der getrennt abgepackten Komponenten A und B oder die Beständigkeit der gehärteten Klebe-, Dichtungs- oder Beschichtungsmasse verbessern, insbesondere Haftvermittler, oberflächenaktive Zusatzstoffe, beispielsweise Emulgatoren, Flammschutzmittel, UV-Absorptionsmittel, Lichtschutzmittel und Stabilisatoren, beispielsweise Antioxydantien, sowie fungistatisch und/oder bakteriostatisch wirkende Substanzen.

Diejenigen zweikomponentigen Klebe-, Dichtungs- oder Beschichtungsmassen, in welchen sowohl die Komponente A als auch die Komponente B bei Zimmertemperatur fliessfähig ist, sind besonders bequem durch ein einfaches Vermischen dieser beiden Komponenten in den verwendbaren Zustand zu bringen. In diesem Fall ist es vorteilhaft, wenn die Komponente A und die Komponente B bei Zimmertemperatur eine ähnliche Viskosität aufweisen.

Falls jedoch die eine der beiden Komponenten bei Zimmertemperatur eine hohe Viskosität besitzt, wodurch die Vermischung mit der zweiten Komponent schwer möglich ist, kann durch einen einfachen Aufheizvorgang die eine der beiden Komponenten oder beide Komponenten in einen ausreichend fliessfähigen Zustand übergeführt werden.

Des weiteren betrifft die vorliegende Erfindung die Verwendung der erfindungsgemässen zweikomponentigen Klebe-, Dichtungs- oder Beschichtungsmassen, die dadurch gekennzeichnet ist, dass man
die Komponente A mit der Komponente B vermischt und diese Mischung auf die zu verklebenden, abzudichtenden oder zu beschichtenden Substrate aufträgt,
oder dass man auf das Substrat zunächst eine Schicht der Komponente A und darüber eine Schicht der Komponente B oder zunächst eine Schicht der Komponente B und darüber eine Schicht der Komponente A aufträgt,
oder dass bei der Verklebung einer Substratfläche 1 mit einer Substratfläche 2 auf die Substratfläche 1 die Komponente A und auf die Substratfläche 2 die Komponente B aufgebracht und die beiden zu verklebenden Substratflächen miteinander in Berührung gebracht werden.

Die Erfindung sei nun anhand von speziellen Beispielen näher erläutert.

### Beispiel 1

Anhand dieses Beispiels wird eine zweikomponentige Klebe-, Dichtungs- oder Beschichtungsmasse erläutert, in welcher
die Komponente A einen Bestandteil enthält, der freie Isocyanatgruppen aufweist, und
die Komponente B einen Bestandteil enthält, der die reaktiven Wasserstoffatome zur Verfügung stellt, welche zur Vernetzung der freien Isocyanatgruppen des entsprechenden Bestandteils der Komponente A erforderlich sind, und die Komponente B enthält ausserdem einen Bestandteil, der als reaktive Gruppen Silangruppen trägt, die zu einer Vernetzung der Komponente B führen, sobald diese mit dem Wasser der Umgebung in Berührung kommen.

Gemäss der in diesem Beispiel erläuterten Ausführungsart der zweikomponentigen Klebe-, Dichtungs- oder Beschichtungsmasse, enthält die Komponente A ein Polyurethan mit endständigen, an aliphatische Reste oder aromatische Reste gebundenen Isocyanatgruppen, und die Komponente B enthält als Polymermaterial ein solches, welches sowohl primäre und/oder sekundäre Aminogruppen und/oder freie Hydroxyl- und/oderfreie Mercapto-gruppen enthält, und ferner die zur Vernetzung der Komponente B mit dem Wasser der Umgebung benötigten, endständige Silangruppen. Bei der in diesem Beispiel beschriebenen Ausführungsart enthält oder besteht die Komponente B aus einem Polyurethan mit endständigen Silangruppen, welches ausserdem, gebunden an das Polyurethangrundgerüst, die für die Vernetzung der Komponente A erforderlichen freien Aminogruppen und/oder Hydroxylgruppen und/oder Mercaptogruppen enthält.

Bei Lagerung der Komponente A unter Wasserabschluss und bei der Lagerung der davon getrennt abgepackten Komponente B unter Wasserabschluss, weisen diese beiden Komponenten hervorragende Lagerstabilität auf.

Wird die Komponente A mit der Komponente B vermischt, dann erfolgt eine rasche Härtung der Komponente A durch den Kontakt der darin enthaltenen freien Isocyanatgruppen mit den primären oder sekundären Aminogruppen und/oder Hydroxyl- und/oder Mercaptogruppen, die in der Komponente B enthalten sind.

An denjenigen Stellen, an denen nach der Vermischung die primären oder sekundären Aminogruppen oder Hydroxylgruppen oder Mercaptogruppen in unzureichendem Ausmass enthalten sind (ungenaues Mischungsverhältnis der Komponenten A und B, beziehungsweise inhomogene Vermischung), erfolgt jedoch durch den Kontakt der freien Isocyanatgruppen mit dem Wasser der Umgebung, beispielsweise der Luftfeuchtigkeit, ebenfalls eine vollständige Aushärtung der Komponente A.

Des weiteren erfolgt auch eine vollständige Aushärtung der Komponente B bei Kontakt mit Wasser aufgrund der Reaktion der endständigen Silangruppen derselben mit dem Wasser der Umgebung, beispielsweise der Luftfeuchtigkeit.

Da sowohl die Komponente A als auch die Komponente B beim Kontakt mit dem Wasser der Umgebung vollständig aushärten, wird in den Bereichen mit stöchiometrisch nicht befriedigenden Mischungsverhältnissen dennoch eine vollständige Aushärtung der Komponente A und auch der Komponente B erreicht. Unmittelbar nach der Vermischung der Komponente A mit der Komponente B und der Durchführung einer Verklebung mit dieser Mischung, entwikkelt sich rasch eine ausreichende Festigkeit der Klebestellen (aufgrund der Reaktion der freien Isocyanatgruppen der Komponente A mit den Amino- oder Mercapto- oder Hydroxylgruppen, die in der Komponente B enthalten sind), und deshalb ist keine zusätzliche Halterung erforderlich.

Eine noch raschere Entwicklung einer hohen Anfangsfestigkeit der Klebestelle, bzw. Abdichtung, lässt sich erreichen, in dem man der die freien Isocyanatgruppen enthaltenden Komponente A einen zusätzlichen Bestandteil einverleibt, der bei Kontakt mit den in der Komponente B enthaltenen Silangruppen zu einer Vernetzung des Silangruppen enthaltenden Bestandteils der Komponente B führt. Als Beispiele für solche zusätzliche Bestandteile, die in der Komponente A enthalten sein können, seien spezielle Katalysatoren genannt, die eine Vernetzung der Silangruppen bewirken.

### Beispiel 2

Dieses Beispiel erläutert diejenige Ausführungsart der Erfindung, in weicher die Komponente A einen Bestandteil enthält, der freie Isocyanatgruppen aufweist und ausserdem eine spezielle Verbindung (1), beispielsweise einen Katalysator (1 ) und
die Komponente B ebenfalls einen Bestandteil enthält, der freie Isocyanatgruppen aufweist und zusätzliche eine spezielle Verbindung (2), beispielsweise einen Katalysator (2).

In diesem Falle reagiert bei der Vermischung der Komponente A mit der Komponente B die in der Komponente A enthaltene spezielle Verbindung (1) mit der in der Komponente B enthaltenen speziellen Verbindung (2) zu einem hochreaktiven Bestandteil, der die Vernetzung des freie Isocyanatgruppen aufweisenden Bestandteils der Komponente A und auch die Vernetzung des freie Isocyanatgruppen aufweisenden Bestandteils der Komponente B bewirkt.

Bei der in diesem Beispiel veranschaulichten Ausführungsart ist die Komponente A ein Polyurethan mit endständigen, an aliphatische Reste oder aromatische Reste gebundenen Isocyanatgruppen, und die Komponente A enthält ausserdem einen Katalysator (1).

Die Komponente B ist ebenfalls ein Polyurethan mit endständigen, an aliphatische Reste oder aromatische Reste gebundenen freien Isocyanatgruppen, und sie enthält ausserdem einen Katalysator (2).

Bei der Vermischung der Komponente A mit der Komponente B reagiert der Katalysator (1) mit dem Katalysator (2) zu einem hochreaktiven Trimerisierungskatalysator, der sowohl die Aushärtung der Komponente A als auch die Aushärtung der Komponente B bewirkt.

Die allmähliche Aushärtung der Komponente A und auch die allmähliche Aushärtung der Komponente B erfolgt andererseits durch den Kontakt der freien Isocyanatgruppen des Bestandteils der Komponente A, und der freien Isocyanatgruppen des Bestandteils der Komponente B mit dem Wasser der Umgebung, beispielsweise der Luftfeuchtigkeit.

Somit erfolgt bei der in diesem Beispiel beschriebenen Ausführungsart auch an denjenigen Stellen der klebenden Verbindung, bzw. der Abdichtung, an denen aufgrund eines nicht stöchiometrischen Mischungsverhältnisses der Komponenten A und B eine unzureichende Menge des aus den Katalysatoren 1 und 2 gebildeten, hochreaktiven Trimerisierungskatalysator gebildet wird, eine allmähliche vollstände Aushärtung, sowohl der Komponente A als auch der Komponente B durch den Kontakt mit dem Wasser der Umgebung.

Im vorliegenden Fall war der Katalysator (1) ein Ammoniumderivat
und der Katalysator (2) war ein Epoxidgruppen enthaltendes Derivat
und bei Kontakt dieses Katalysators (1) mit dem Katalysator (2) ergab sich ein Trimerisierungskatalysator für die freien Isocyanatgruppen der Komponente A und die freien Isocyanatgruppen der Komponente B.

### Beispiel 3

Anhand dieses Beispiels wird eine solche zweikomponentige Klebe-, Dichtungs- oder Beschichtungsmasse erläutert, in welcher
sowohl die Komponente A als auch die Komponente B einen Bestandteil enthält, der freie Isocyanatgruppen aufweist, wobei jedoch die in der Komponente A enthaltenen freien Isocyanatgruppen eine geringere Reaktivität besitzen, als die in der Komponente B enthaltenen freien Isocyanatgruppen.

Bei dieser Ausführungsart muss die Komponente A zusätzlich einen latenten Härter enthalten, beispielsweise ein Aldimin, ein Ketimin oder ein Oxazolidin, und die Komponente B muss ferner eine spezielle Verbindung enthalten, die beim Kontakt der Komponente A mit der Komponente B den latenten Härter der Komponente A aktiviert, welcher zu der Vernetzung der Komponente A durch Reaktion mit den freien Isocyanatgruppen derselben führt.

In der vorliegenden Ausführungsart enthält die Komponente A ein Polyurethan mit endständigen, an aliphatische Reste gebundenen Isocyanatgruppen, und die Komponente B ebenfalls ein Polyurethan, jedoch mit endständigen, an aromatische Reste gebundenen Isocyanatgruppen. Die an aromatische Reste gebundenen Isocyanatgruppen der Komponente B weisen also eine höhere Reaktivität auf als die an aliphatische Reste gebundenen Isocyanatgruppen der Komponente A.

Bei Vermischung der Komponente A mit der Komponente B wird in der Komponente A der latente Härter aktiviert, und somit erfolgt eine rasche Härtung der Komponente A.

Bei Kontakt der Komponente A mit Wasser aus der Umgebung und bei Kontakt der Komponente B mit Wasser aus der Umgebung, beispielsweise der Luftfeuchtigkeit, erfolgt ferner eine vollständige Aushärtung der Komponente A und auch eine vollständige Aushärtung der Komponente B aufgrund der in diesen Komponenten enthaltenen freien Isocyanatgruppen.

Somit erfolgt eine vollständige Aushärtung der Komponente A der hier beschriebenen Klebe-, Dichtungs- oder Beschichtungsmasse auch an denjenigen Stellen, an welchen eine unzureichende Menge der speziellen in der Komponente B enthaltenen Verbindung vorhanden ist, und somit keine vollständige Freisetzung des Härters aus dem latenten Härter stattfindet.

Im vorliegenden Fall wurde in der Komponente A als latenter Härter ein Isophoron-dialdimin
verwendet, und die in der Komponente B enthaltene spezielle Verbindung, die zur Freisetzung des Amins aus dem latenten Härter der Komponente A führt, war eine sehr reaktive Isocyanatverbindung.

### Beispiel 4

Das vorliegende Beispiel erläutert diejenige Ausführungsart der erfindungsgemässen zweikomponentigen Klebe-, Dichtungs- oder Beschichtungsmasse, in welcher
die Komponente A einen Bestandteil enthält, der freie Isocyanatgruppen aufweist und
die Komponente B einen Bestandteil enthält, der reaktive Epoxidgruppen aufweist und wobei die Komponente B ferner freie Hydroxylgruppen enthält, die bei Kontakt der Komponente A mit der Komponente B zu einer raschen Aushärtung der Komponente A aufgrund des Kontaktes der freien Isocyanatgruppen mit den Hydroxylgruppen der Komponente B führt.

In der hier beschriebenen Ausführungsart war die Komponente A ein Polyurethanharz mit freien Isocyanatgruppen, und die Komponente B war ein freie Hydroxylgruppen enthaltendes Epoxidharzsystem.

In der in diesem Beispiel veranschaulichten Ausführungsart enthielt die Komponente B zusätzlich einen latenten Härter für die in dieser Komponente enthaltenen freien Epoxidgruppen, und die Komponente A enthielt ausserdem einen Beschleuniger oder Aktivator für den in der Komponente B enthaltenen latenten Härter für die Vernetzung des Epoxidgruppen enthaltenden Bestandteils der Komponente B.

Somit erfolgte bei der Vermischung der Komponente A mit der Komponente B sowohl eine rasche Aushärtung der Komponente A als auch eine rasche Aushärtung der Komponente B.

An denjenigen Stellen der so erhaltenen Verklebung oder Beschichtung, an denen das Mischungsverhältnis aus dem in der Komponente A enthaltenen Beschleuniger oder Aktivator, mit dem in der Komponente B enthaltenen Härter, beziehungsweise das Mischungsverhältnis der Isocyanatgruppen der Komponente A mit den in der Komponente B enthaltenen freien Hydroxylgruppen, nicht den idealen stöchiometrischen Verhältnissen entsprach, erfolgte dennoch eine vollständige Vernetzung, sowohl der Komponente A als auch der Komponente B, aufgrund der Reaktion der freien Isocyanatgruppen der Komponente A mit dem Wasser der Umgebung und aufgrund der Freisetzung des Härters in der Komponente B durch Kontakt des latenten Härters mit dem Wasser und die Härtung der Epoxidgruppen durch den freigesetzten Härter.

Im vorliegenden Beispiel war der in der Komponente B enthaltene latente Härter ein Isophorondialdiminderivat und
der in der Komponente A enthaltene Aktivator, beziehungsweise Beschleuniger, für diesen latenten Härter der Komponente B war eine langkettige aliphatische Carbonsäure.

Gemäss einer weiteren Ausführungsart des vorliegenden Beispiels 4 enthielt die Komponente B reaktive Epoxidgruppen und zusätzlich noch einen Trimerisierungskatalysator für die in der Komponente A enthaltenen freien Isocyanatgruppen.

### Beispiel 5

Im vorliegenden Beispiel enthielt die Komponente A einen Bestandteil, der als reaktive Gruppen Epoxidgruppen aufwies, und ferner einen latenten Härter für die Vernetzung der Epoxidgruppen dieses Epoxidgruppen tragenden Bestandteils der Komponente A, vorzugsweise ein Aldimin, ein Ketimin oder ein Oxazolidin.

Im vorliegenden Beispiel enthielt die Komponente B eine Verbindung mit endständigen reaktiven Silangruppen und ferner eine Komponente mit primären oder sekundären Aminogruppen oder freien Mercaptogruppen.

Bei Kontakt der Komponente B mit der Komponente A erfolgt also eine rasche Vernetzung des die reaktiven Epoxidgruppen aufweisenden Bestandteils der Komponente A durch Aktivierung des in der Komponente A enthaltenen latenten Härters, bzw. durch eine Reaktion der primären oder sekundären Aminogruppen, bzw. Mercaptogruppen, die in der Komponente B enthalten sind, mit dem in der Komponente A enthaltenen latenten Härter für die Epoxidgruppen.

Des weiteren erfolgt bei der hier beschriebenen Ausführungsart 1 des Beispiels 5 an denjenigen Stellen, an denen das Mischungsverhältnis der Komponente A mit der Komponente B vom idealen stöchiometrischen Mischungsverhältnis abweicht, dennoch eine vollständige Aushärtung der Komponente A aufgrund der Aktivierung des latenten Härters, beispielsweise einer Freisetzung des Härters aus dem latenten Härter, der in der Komponente A enthalten ist Diese Aktivierung erfolgt durch das Wasser der Umgebung, beispielsweise die Luftfeuchtigkeit.

Des weiteren erfolgt auch eine vollständige Aushärtung der Komponente B durch die Reaktion der in der Komponente B enthaltenen endständigen Silangruppen mit dem Wasser der Umgebung.

Bei der oben beschriebenen Variante I des Beispiels 5 enthielt die Komponente A ein Epoxidharz, das gegebenenfalls zusätzlich zu den freien Epoxidgruppen noch Hydroxylgruppen enthielt.

Gemäss einer Variante II des vorliegenden Beispiels 5, enthielt die Komponente A als weiteren Bestandteil eine Komponente, die bei Kontakt mit der Komponente B zu einer raschen Härtung der in der Komponente B enthaltenen freien Silangruppen führte.

Bei dieser Variante II des vorliegenden Beispiels 5, erfolgte also ebenfalls eine rasche Härtung der Komponente B bei Kontakt derselben mit der Komponente A.

Als Beispiel für in der Komponente A enthaltene Bestandteile, die zu einer raschen Aushärtung der in der Komponente B enthaltenen Silangruppen führen, seien spezielle Katalysatoren genannt, die eine Vernetzung der Silangruppen bewirken.

### Beispiel 6

Anhand dieses Beispiels wird eine zweikomponentige Klebe-, Dichtungs- oder Beschichtungsmasse beschrieben, in welcher
die Komponente A einen Bestandteil enthält, der als reaktive Gruppen Epoxidgruppen aufweist und ferner ein Säureanhydrid und gegebenenfalls ausserdem noch einen latenten Härter für die in der Komponente A enthaltenen Epoxidgruppen.

Die Komponente B enthielt einen Bestandteil, der als reaktive Gruppen Silylgruppen trägt und ferner eine Komponente, die bei Kontakt mit dem in der Komponente A enthaltenen Säureanhydrid zu einer Freisetzung der Säure führt und allenfalls auch ein Akfrvator oder Beschleuniger, der zur Freisetzung des Härters aus dem in der Komponente A allenfalls zusätzlich enthaltenen latenten Härter für die Epoxidgruppen führt.

Bei dieser Ausführungsart war der in der Komponente A enthaltene Bestandteil mit freien Epoxidgruppen ein Harz mit reaktiven Epoxidgruppen, das jedoch frei von Hydroxylgruppen sein muss. Epoxidharze mit freien Hydroxylgruppen besitzen in der vorliegenden Ausführungsart nämlich keine Lagerbeständigkeit, well die Hydroxylgruppen mit dem in der Komponente A enthaltenen Säureanhydrid reagieren und somit durch die Freisetzung der Säure aus dem Säureanhydrid eine allmähliche Härtung des Epoxidharzes erfolgen würde.

Bei Kontakt der Komponente A mit der Komponente B erfolgt eine rasche Aushärtung der Komponente A aufgrund der Freisetzung der Säure aus dem in der Komponente A enthaltenen Säureanhydrid, bzw. aufgrund der Freisetzung des allenfalls in der Komponente A enthaltenen latenten Härters durch die Säure, bzw. einen gegebenenfalls in der Komponente B enthaltenen zusätzlichen Bestandteil.

Des weiteren erfolgt an denjenigen Stellen der mit dieser Masse hergestellten Beschichtung oder Abdichtung, an denen das Mischungsverhältnis der Komponente A mit der Komponente B von den idealen stöchiometrischen Verhältnissen abweicht, eine allmähliche Aushärtung der Komponente A durch den Kontakt mit dem Wasser der Umgebung, welches aus dem Säureanhydrid die entsprechende Säure freisetzt und somit zu einer Vernetzung der Komponente A führt.

Auch die Komponente B härtet mit dem Wasser der Umgebung allmählich vollständig aus aufgrund der Reaktion der freien Silylgruppen bei Kontakt mit dem Wasser der Umgebung.

### Beispiel 7

Anhand dieses Beispiels wurde die Zugscherfestigkeit der Verklebung getestet, die bei Vermischung der Komponente A mit der Komponente B der Klebemasse gemäss Beispiel 1 erzielt wurde.

Durch die Zugabe von Füllstoffen, wurde dabei die Komponente A und auch die Komponente B so formuliert, dass bei Vermischung eines Volumenteils der Komponente A mit einem Volumenteil der Komponente B, die in der Komponente A enthaltenen freien Isocyanatgruppen durch die in der Komponente B enthaltenen freien Aminogruppen, eine vollständige Vernetzung der Isocyanatgruppen der Komponente A und ein vollständiger Verbrauch der freien Aminogruppen der Komponente B erreicht wurde, also der Aminogruppen des endständige Silangruppen aufweisende Polyurethanharzes, in dem ausserdem an jedes Polymermolekül noch mindestens zwei freie Aminogruppen gebunden waren.

Die Zugscherfestigkeit der Klebestellen wurde nach der Methode DIN54451 gemessen, und sie wird in MPa angegeben.

Bei homogener Vermischung eines Volumenteils des Komponente A mit einem Volumenteil der Komponente B wurde eine endgültige Zugscherfestigkeit von 1,3 M Pa erreicht. Diese endgültige Zugscherfestigkeit war bereits zwei Stunden nach der Vermischung der Komponente A mit der Komponente B erreicht.

In einem weiteren Versuch wurde die gleiche Komponente A mit der gleichen Komponente B ebenfalls homogen vermischt, jedoch wurde in diesem Fall ein Volumenteil der Komponente A mit zwei Volumenteilen der Komponente B vermischt.

Bei diesem Mischungsverhältnis war die endgültige Zugscherfestigkeit minimal geringer. Sie betrug 1,2 MPa. Allerdings wurde dieser endgültige Wert der Zugscherfestigkeit erst nach fünf Stunden erreicht Dies ist nicht verwunderlich, weil durch den Ueberschuss der Komponente B zwar die sofortige Härtung der freien Isocyanatgruppen der Komponente A erreicht wurde, die in der Komponente B enthaltenen freien Silangruppen jedoch erst bei Kontakt mit einer ausreichenden Menge an Luftfeuchtigkeit zu einer vollständigen Härtung der Komponente B führten.

In einem weiteren Versuch wurde wieder eine Mischung aus den gleichen Komponenten A und B hergestellt, jedoch wurden diesmal zwei Volumina der Komponente A mit einem Volumen der Komponente B vermischt.

In diesem Fall betrug die endgültige Zuscherfestigkeit der Klebestellt wieder 1,2 MPa, jedoch war dieser endgültige Wert erst nach acht Stunden erreicht Dieses Ergebnis lässt sich dadurch erklären, dass durch den Unterschuss der Komponente B in der Mischung aus den Komponenten A und B zu wenig freie Aminogruppen vorhanden waren, um eine sofortige Härtung sämtlicher Isocyanatgruppen der Komponente A zu erreichen. Somit mussten die unumgesetzten freien Isocyanatgruppen der Komponente A und die freien Silangruppen der Komponente B durch die Luftfeuchtigkeit vollständig gehärtet werden.

Zu Vergleichszwecken wurde die Klebung nur mit der Komponente A (ohne Zugabe der Komponente B) durchgeführt, und in einem weiteren Vergleichsversuch die Klebung nur mit der Komponente B (ohne Zugabe der Komponente A) durchgeführt.

Diese ist möglich, da ja sowohl die Komponente A als auch die Komponente B einen Einkomponenten-Klebstoff darstellt, der bei alleinigem Kontakt mit der Feuchtigkeit der Umgebung aushärtet

Bei alleiniger Verwendung der Komponente A wies die hergestellte Klebestelle einen endgültigen Wert der Zugscherfestigkeit von 1,1 MPa auf, und bei der alleinigen Verwendung der Komponente B wies die Klebestelle eine endgültige Zugscherfestigkeit von 1,0 MPa auf.

Bei der alleinigen Verwendung der Komponente A war diese endgültige Zugscherfestigkeit jedoch erst acht Tage nach der Aufbringung erreicht, und
bei der alleinigen Verwendung der Komponente B wurde diese endgültige Zugschefiestigkeß erst nach sieben Tagen erreicht.

## Patentansprüche

1. Zweikomponentige Klebe- Dichtungs- oder Beschichtungsmasse, die frei von solchen Feststoffkomponenten ist, die eine ionenaustauschende Wirkung besitzen, wobei die Masse, getrennt abgepackt, die Komponente A und die Komponente B umfasst, die, getrennt voneinander, lagerbeständig sind, jedoch bei einem Kontakt der Komponente A mit der Komponente B, eine Härtung der Masse erfolgt, wobei
die Komponente A mindestens einen Bestandteil enthält, der reaktive Gruppen aufweist, die zu einer Vernetzung der Komponente A führen, sobald diese mit mindestens einem Bestandteil der Komponente B und/oder mit Wasser in Berührung kommt,
**dadurch gekennzeichnet, dass**
die Komponente B den Bestandteil enthält, der die Vernetzung der Komponente A bewirkt und ausserdem mindestens einen Bestandteil enthält, der reaktive Gruppen aufweist, die zu einer Vernetzung der Komponente B führen, sobald diese mit Wasser oder gegebenenfalls mit einem Bestandteil in Berührung kommen, der in der Komponente A enthalten ist und
wobei
die reaktiven Gruppen des mindestens einen Bestandteil der Komponente A selbst zu einer Vernetzung der Komponente A führen, sobald diese Gruppen mit Wasser in Berührung kommen oder
dass die reaktiven Gruppen des mindestens einen Bestandteil der Komponente A selbst nicht in der Lage sind, mit Wasser die Vernetzungsreaktion zu bewirken, wobei jedoch in der Komponente A zusätzlich ein latenter Härter enthalten ist, der bei Kontakt mit Wasser aktiviert wird, beispielsweise durch Freisetzung eines entsprechenden Härters, und wobei der aktivierte oder freigesetzte Härter durch Reaktion mit den reaktiven Gruppen des Bestandtells zu einer Vernetzung der Komponente A führt und dass in der Komponente E edenfalis die reaktiven Gruppen des entsprechenden Bestandtells zu einer Vernetzung der Komponente B führen, sobald diese reaktiven Gruppen mit Wasser in Berührung kommen oder dass die reaktiven Gruppen der Komponente B selbst auch zu keiner Vernetzungsreaktion befähigt sind, sobald sie mit Wasser in Berührung kommen, wobei dann in der Komponente B ebenfalls zusätzlich ein latenter Härter anwesend ist, der bei Kontakt mit Wasser aktiviert wird und somit zur Reaktion mit den reaktiven Gruppen des Bestandteils der Komponente B befähigt ist und dadurch zu der Vernetzung der Komponente B führt und dass
das Wasser, welches die Vernetzung der Komponente A und die Vernetzung der Komponente B bewirkt, die Feuchtigkeit der Umgebung ist.

2. Zweikomponentige Klebe-, Dichtungs- oder Beschichtungsmasse gemäss Anspruch 1 **dadurch gekennzeichnet, dass** der in der Komponente B enthaltene Bestandteil, der zu einer Vernetzung des reaktive Gruppen aufweisenden Bestandteils der Komponente A beim Kontakt der Komponente A mit der Komponente B führt, ein Härter oder ein latenter Härter für die reaktiven Gruppen der Komponente A ist, oder dass dieser in der Komponente B enthaltene Bestandteil einen Aktivator für einen in der Komponente A enthaltenen Bestandteil darstellt, und dass
die Komponente A ebenfalls einen Härter oder latenten Härter für die reaktiven Gruppen des entsprechenden Bestandteils der Komponente B oder einen Aktivator für einen in der Komponente B anwesenden Bestandteil enthält, sodass eine Vernetzung der Komponente B stattfindet, sobald diese mit der Komponente A in Berührung kommt.

3. Zweikomponentige Klebe-, Dichtungs- oder Beschichtungsmasse gemäss einem der Ansprüche 1 bis 2, **dadurch gekennzeichnet, dass** die Komponente A und/oder die Komponente B eine Verbindung enthält, die allein, in Zusammenwirkung mit dem Wasser der Umgebung, in Zusammenwirkung mit einem Härter oder einem latenten Härier und/oder in Zusammenwirkung mit einer weiteren Verbindung, die in der anderen Komponente enthalten ist, zu einer Vernetzung, beziehungsweise Selbstvernetzung der reaktiyen Gruppen des diese Gruppen aufweisenden Bestandteils der anderen der beiden genannten Komponenten A und B führt.

4. Zweikomponentige Klebe-, Dichtungs- oder Beschichtungsmasse gemäss einem der Ansprüche 1 bis 3, **dadurch gekennzeichnet, dass** die beim Kontakt mit Wasser, beziehungsweise beim Kontakt mit einem durch Wasser freigesetzten Härter reaktiven Gruppen, welche die Vernetzung der Komponente A, beziehungsweise die Vernetzung der Komponente B bewirken, und welche an den entsprechenden Bestandteil der Komponente A, beziehungsweise an den entsprechenden Bestandteil der Komponente B, gebunden sind, aus der Gruppe ausgewählt sind, welche Isocyanatgruppen, blockierte Isocyanatgruppen, Silangruppen, Säureanhydridgruppen oder Epoxidgruppen, kombiniert mit einem durch Wasser aktivierbaren Härter für Epoxy und Kombinationen aus zwei oder mehr der genannten Gruppen umfassen.

5. Zweikomponentige Klebe-, Dichtungs- oder Beschichtungsmasse gemäss einem der Ansprüche 1 bis 4, **dadurch gekennzeichnet, dass**
die Komponente A einen Bestandteil enthält, der freie Isocyanatgruppen aufweist, und dass die Komponente B als reaktive Gruppen Silangruppen enthält, und ausserdem eine Verbindung enthält, welche die reaktiven Wasserstoffatome liefert, die bei dem Kontakt der Komponente A mit der Komponente B die Vernetzung der Komponente A durch Reaktion der in ihnen enthaltenen freien Isocyanatgruppen mit den reaktiven Wasserstoffatomen der Komponente B bewirkt, und wobei die reaktive Wasserstoffatome liefernde Verbindung der Komponente B ein primäres oder sekundäres Amin oder eine freie Hydroxylgruppen aufweisende Verbindung ist, und dass
die in der Komponente B enthaltenen reaktiven Gruppen Silangruppen, endständige Silangruppen sind, die an ein Copolymerisat gebunden sind, vorzugsweise ein entsprechendes Polyurethan und wobei
in der Komponente A zusätzlich ein Bestandteil enthalten ist, beispielsweise ein Härter oder ein Aktivator, der zu einer Vernetzung der Komponente B aufgrund der Reaktion der Silangruppen mit diesem Bestandteil oder der Reaktion eines in der Komponente B enthaltenen latenten Härters mit diesem Bestandteil der Komponente A führt.

6. Zweikomponentige Klebe- Dichtungs- oder Beschichtungsmasse gemäss einem der Ansprüche 1 bis 4, **dadurch gekennzeichnet, dass**
die Komponente A einen Bestandteil enthält, der freie Isocyanatgruppen aufweist, und der ein Polyurethan mit endständigen, an aliphatische Reste oder aromatische Reste gebundenen Isocyanatgruppen ist, und dass die Komponente A ausserdem eine Verbindung (1) enthält und dass
die Komponente B ebenfalls einen Bestandteil enthält, der freie Isocyanatgruppen aufweist und vorzugsweise ein Polyurethan mit endständigen, an aliphatische Reste oder aromatische Reste gebundenen Isocyanatgruppen ist und zusätzlich eine Verbindung (2) enthält, wobei bei Kontakt der Komponente A mit der Komponente B die Verbindung (1) mit der Verbindung (2) zu einem hochreaktiven Bestandteil reagiert, der die Vernetzung des freie Isocyanatgruppen aufweisenden Bestandteils der Komponente A und die Vernetzung des freie Isocyanatgruppen aufweisenden Bestandteils der Komponente B bewirkt, und wobei dann, wenn die Verbindung (1) ein Katalysator (1) ist und die Verbindung (2) ein Katalysator (2) ist, der Katalysator (1) mit dem Katalysator (2) zu einem hochreaktiven Katalysator reagiert.

7. Zweikomponentige Klebe-, Dichtungs- oder Beschichtungsmasse gemäss einem der Ansprüche 1 bis 4, **dadurch gekennzeichnet, dass**
sowohl die Komponente A als auch die Komponente B einen Bestandteil enthält, derfreie Isocyanatgruppen aufweist, wobei jedoch die in der Komponente A enthaltenen freien Isocyanatgruppen eine geringere Reaktivität besrtzen als die in der Komponente B enthaltenen freien Isocyanatgruppen, und wobei der entsprechende Bestandteil der Komponente A ein Polyurethan mit endständigen an aliphatische Reste gebundenen Isocyanatgruppen ist, und der entsprechende Bestandteil der Komponente B ein Polyurethan mit endständigen, an aromatische Reste gebundenen isocyanatgruppen darstellt, und wobei
die Komponente A zusätzlich einen latenten Härter enthält, der bei Kontakt mit einer Verbindung, die in der Komponente B enthalten ist, den latenten Härter aktiviert, und dass
die Komponente B zusätzlich die Verbindung enthält, welche zur Aktiviertung des Härters in der Komponente A erforderlich ist, so dass bei Kontakt der Komponente A mit der Komponente B die Komponente A vernetzt wird, und ausserdem eine Vernetzung sowohl der Komponente A als auch der Komponente B erfolgt, sobald diese Komponenten mit Wasser in Berührung kommen.

8. Zweikomponentige Klebe-, Dichtungs- oder Beschichtungsmasse gemäss einem der Ansprüche 1 bis 4, **dadurch gekennzeichnet, dass**
die Komponente A einen Bestandteil enthält, der freie Isocyanatgruppen aufweist, und dass die Komponente B als reaktive Gruppen Epoxidgruppen aufweist und ferner Hydroxylgruppen enthält, welche die Vernetzung der freien Isocyanatgruppen des entsprechenden Bestandteils der Komponente A bewirken, wobei die Komponente B ein Hydroxygruppen enthaltendes Epoxidharzsystem ist, und dass die Komponente B ausserdem einen latenten Härter enthält, der zur einer Vernetzung des die Epoxidgruppen enthaltenden Bestandteils führt, sobald dieser mit Wasser in Berührung kommt, wobei dieser latente Härter ein Aldimin, Ketimin oder Oxazolidin ist, und wobei
die Komponente A zusätzlich einen Beschleuniger oder Aktivator für den in der Komponente B enthaltenen latenten Härter für die Vemetzung des die Epoxidgruppen enthaltenden Bestandteils enthält, sodass
bei Kontakt der Komponente A mit der Komponente B eine Härtung der Komponente A erfolgt und auch die Härtung der Komponente B durch den in der Komponente A enthaltenen Beschleuniger oder Aktivator für den latenten Härter der Komponente B erfolgt und wobei,
bei Kontakt der Komponente A und bei Kontakt der Komponente B mit Wasser, sowohl eine Härtung der Komponente A als auch eine Härtung der Komponente B erfolgt.

9. Zweikomponentige Klebe-, Dichtungs- oder Beschichtungsmasse gemäss einem der Ansprüche 1 bis 4, **dadurch gekennzeichnet, dass**
die Komponente A einen Bestandteil enthält, der als reaktive Gruppe Silangruppen aufweist, und
die Komponente B einen Bestandteil enthält, der als reaktive Gruppe Epoxidgruppen aufweist und einen Bestandteil, der bei Kontakt mit der Komponente A zu einer Härtung des die Silangruppen tragenden Bestandteils der Komponente A führt, und dass die Komponente B ausserdem einen latenten Härter enthält, der zu einer Vernetzung des die Epoxidgruppen enthaltenden Bestandteils führt, sobald dieser latente Härter mit Wasser in Berührung kommt, und dass
die Komponente A ausserdem einen Bestandteil enthält, der als Beschleuniger oder Aktivator für den latenten Härter der Komponente B wirkt, und dass
bei Kontakt der Komponente A mit der Komponente B eine Härtung der Komponente A erfolgt und auch eine Härtung der Komponente B durch den in der Komponente A enthaltenen Beschleuniger oder Aktivator für den latenten Härter der Komponente B erfolgt, und wobei bei Kontakt mit Wasser, sowohl eine Härtung der Komponente A als auch eine Härtung der Komponnte B erfolgt

10. Zweikomponentige Klebe-, Dichtungs- oder Beschichtungsmasse gemäss einem der Ansprüche 1 bis 4, **dadurch gekennzeichnet, dass** die Komponente A einen Bestandteil enthält, der als reaktive Gruppe Epoxidgruppen aufweist, und ferner einen latenten Härter enthält, der zu einer Vernetzung des die Epoxidgruppen enthaltenden Bestandteils führt, sobald dieser latente Härter mit Wasser oder einem in der Komponente B enthaltenen Aktivator oder Beschleuniger für den latenten Härter in Berührung kommt, und dass
die Komponente B einen Bestandteil enthält, der als reaktive Gruppe Silangruppen trägt, und ferner einen Aktivator oder Beschleuniger für den in der Komponente A enthaltenen latenten Härter enthält, sodass
bei Kontakt der Komponente A mit der Komponente B die Härtung der Komponente A erfolgt, und dass bei Kontakt der Komponente A, beziehungsweise der Komponente B, mit Wasser, sowohl eine Härtung der Komponente A als auch eine Härtung der Komponente B erfolgt.

11. Zweikomponentige Klebe-, Dichtungs- oder Beschichtunasmasse gemäss einem der Ansprüche 1 bis 10, **dadurch gekennzeichnet, dass** die Komponente A und/oder die Komponente B mindestens einen weiteren Bestandteil enthält, der aus der Gruppe von Materialien ausgewählt ist, welche die folgenden Komponenten umfasst:
Bindemittel,
Weichmacher,
Füllstoffe, ausgewählt aus der Gruppe umfassend Kieselsäurederivate, Gips, Talkum, Metallpulver, Kreide, Kaoline, Aktivkohle oder Russ, sowie organische Füllstoffe,
Thixotropiermittel, ausgewählt aus der Gruppe umfassend Bentone, Russ, Kieselsäurederivate, gefällte Kreiden, Polyvinylchlorid, Harnstoffderivate, oder Acrylderivate,
Farbstoffe und/oder Pigmente, und
weitere Zusätze, weiche die Anwendungselgenschaften, die Haftbarkeit der getrennt abgepackten Komponenten A und B oder die Beständigkeit der gehärteten Klebe-, Dichtungs- oder Beschichtungsmasse verbessern.

12. Zweikomponentige Klebe-, Dichtungs- oder Beschichtungsmasse gemäss einem der Ansprüche 1 bis 11, **dadurch gekennzeichnet, dass** sowohl die Komponente A als auch die Komponente B bei Zimmertemperatur fliessfähig sind und dass bei Zimmertemperatur vorzugsweise die Komponente A und die Komponente B eine ähnliche Viskosität aufweisen.

13. Verwendung der zweikomponentigen Klebe-, Dichtungs- oder Beschichtungsmasse gemäss einem der Ansprüche 1 bis 12, **dadurch gekennzeichnet, dass** man
die Komponente A mit der Komponente B vermischt und diese Mischung auf die zu klebenden, abzudichtenden oder zu beschichtenden Substrate aufträgt,
oder dass man auf das Substrat zuerst eine Schicht der Komponente A und darüber eine Schicht der Komponente B oder zuerst eine Schicht der Komponente B und darüber eine Schicht der Komponente A aufträgt,
oder dass bei der Verklebung einer Substratfläche 1 mit einer Substratfläche 2 auf die Substratfläche 1 die Komponente A und auf die Substratfläche 2 die Komponente B aufgebracht und die beiden zu verklebenden Substratflächen miteinander in Berührung gebracht werden.

## Claims

1. Two-component adhesive, sealing or coating composition which is free of such solid components having an ion exchanging effect, whereby the composition, separately packed, comprises the component A and the component B which are storable when separated from each other, however, at the contact of the component A with the component B a curing of the composition takes place, whereby
the component A contains at least one constituent having reactive groups which are leading to a cross-linking of the component A as soon as they get in contact with at least one constituent of the component B and/or with water, **characterized in that**
the component B contains the constituent which is causing the cross-linking of the component A and furthermore contains at least one constituent having reactive groups which are leading to a cross-linking of the component B as soon as they get in contact with water or possibly with a constituent that is included in the component A, and whereby
the reactive groups of the at least one constituent of component A themselves lead to a cross-linking of component A as soon as these groups get in contact with water, or
that the reactive groups of the at least one constituent of component A are not able to cause the cross-linking reaction with water themselves, whereby, however, in the component A furthermore a latent curing agent is included that is activated upon contact with water, for example through liberation of a corresponding curing agent, and whereby the activated or liberated curing agent leads to a cross-linking of the component A through reaction with the reactive groups of the constituent, and that
in the component B also the reactive groups of the corresponding constituent lead to a cross-linking of the component B as soon as said reactive groups get in contact with water, or that the reactive groups of the component B are not able to perform a cross-linking reaction as soon as they get in contact with water themselves, whereby in this case a further latent curing agent is also present in the component B which is activated in contact with water and thus is able to react with the reactive groups of said constituent of component B and thereby leads to a cross-linking of the component B, and that
the water which causes the cross-linking of the component A and the cross-linking of the component B is ambient moisture.

2. Two-component adhesive, sealing or coating composition according to claim 1, **characterized in that** the constituent included in component B that upon contact of the component A with the component B leads to a cross-linking of the reactive groups comprising constituent of the component A, is a curing agent or a latent curing agent for the reactive groups of the component A, or that said constituent included in component B is an activator for a constituent included in component A, and that
the component A also comprises a curing agent or a latent curing agent for the reactive groups of the respective constituent of the component B, or an activator for a constituent present in component B, such that a cross-linking of component B takes place as soon as it gets in contact with component A.

3. Two-component adhesive, sealing or coating composition according to one of the claims 1 to 2, **characterized in that** the component A and/or the component B contains a compound that alone, in combination with the ambient water, in combination with a curing agent or a latent curing agent and/or in combination with a further compound, which is included in the other component, leads to a cross-linking or a self-cross-linking, respectively, of the reactive groups of the constituent having these groups of the other of the two mentioned components A and B.

4. Two-component adhesive, sealing or coating composition according to one of the claims 1 to 3, **characterized in that** the groups that are reactive at the contact with water or at the contact with a curing agent liberated by water, respectively, that are causing the cross-linking of the component A, or the cross-linking of the component B, respectively, and that are linked to the corresponding constituent of the component A, or to the corresponding constituent of the component B, respectively, are selected from the group comprising isocyanate groups, blocked isocyanate groups, silane groups, anhydride groups or epoxy groups, combined with a water activatable curing agent for epoxy, and combina-tions of two or more of the mentioned groups.

5. Two-component adhesive, sealing or coating composition according to one of the claims 1 to 4, **characterized in that**
the component A contains a constituent having free isocyanate groups, and that
the component B contains silane groups as reactive groups, and furthermore contains a compound which provides the reactive hydrogen atoms, effecting at the contact of the component A with the component B a cross-linking of the component A through reaction of the free isocyanate groups included therein with the reactive hydrogen atoms of the component B, and whereby the compound of the component B providing the reactive hydrogen atoms is a primary or a secondary amine or a compound having free hydroxy goups, and that
the reactive silane groups in the component B are terminal silane groups which are linked to a copolymer, preferably a corresponding polyurethane, and whereby
a constituent is further contained in the component A, for example a curing agent or an activator which is leading to a cross-linking of the component B, due to the reaction of the silane groups with this constituent or the reaction of a latent curing agent, included in the component B, with said constituent of the component A.

6. Two-component adhesive, sealing or coating composition according to one of the claims 1 to 4, **characterized in that**
the component A contains a constituent having free isocyanate groups, and which is a polyurethane with terminal isocyanate groups linked to aliphatic rests or aromatic rests, and that the component A further contains a compound (1), and that
the component B also contains a constituent having free isocyanate groups, and preferably is a polyurethane with terminal isocyanate groups linked to aliphatic or aromatic rests, and furthermore contains a compound (2), whereby
at the contact of the component A with the component B the compound (1) is reacting with the compound (2) to form a highly reactive constituent which is causing the cross-linking of the constituent of the component A having free isocyanate groups and the cross-linking of the constituent of component B having free isocyanate groups, and whereby, if the compound (1) is a catalyst (1) and the compound (2) is a catalyst (2), the catalyst (1) is reacting with the catalyst (2) to form a highly reactive catalyst.

7. Two-component adhesive, sealing or coating composition according to one of the claims 1 to 4, **characterized in that**
the component A as well as the component B contains a constituent having free isocyanate groups whereby, however, the free isocyanate groups contained in component A have a lower reactivity than the free isocyanate groups contained in component B, and whereby the corresponding constituent of component A is a polyurethane with terminal isocyanate groups linked to aliphatic rests, and the corresponding constituent of the component B is a polyurethane with terminal isocyanate groups linked to aromatic rests, and whereby
the component A is further containing a latent curing agent which is activating the latent curing agent at the contact with a compound which is included in the component B, and that
the component B is further containing the compound which is necessary for the activation of the curing agent in the component A, so that
at the contact of the component A with the component B the component A is cross-linked, and furthermore a cross-linking of the component A as well as the component B takes place as soon as said components get in contact with water.

8. Two-component adhesive, sealing or coating composition according to one of the claims 1 to 4, **characterized in that**
the component A contains a constituent having free isocyanate groups, and that
the component B has, as reactive groups, epoxy groups and further contains hydroxy groups which cause the cross-linking of the free isocyanate groups of the corresponding constituent of the component A, whereby the component B is an epoxy resin system containing hydroxy groups, and that the component B is further containing a latent curing agent which is leading to a cross-linking of the constituent containing the epoxy groups as soon as it gets in contact with water, whereby said latent curing agent is an aldimine, ketimine or an oxazolidine, and whereby
the component A further contains an accelerator or activator for the latent curing agent contained in component B for the cross-linking of the constituent containing the epoxy groups, so that
at the contact of the component A with the component B a curing of the component A takes place and also the curing of the component B through the accelerator or activator for the latent curing agent of the component B included in the component A takes place, and whereby
at the contact of the component A and at the contact of the component B with water a curing of the component A as well as a curing of the component B takes place.

9. Two-component adhesive, sealing or coating composition according to one of the claims 1 to 4, **characterized in that**
the component A contains a constituent having silane groups as reactive groups, and
the component B contains a constituent having epoxy groups as reactive groups and a constituent which at the contact with the component A leads to a curing of the constituent of the component A carrying the silane groups, and that the component B further contains a latent curing agent that leads to a cross-linking of the constituent containing the epoxy groups as soon as this latent curing agent gets in contact with water, and that
the component A further contains a constituent which is acting as an accelerator or activator for the latent curing agent of the component B, and that
at the contact of the component A with the component B a curing of the component A takes place and possibly also a curing of the component B by the accelerator or activator for the latent curing agent of the component B included in the component A takes place, and whereby at the contact with water a curing of the component A as well as a curing of the component B takes place.

10. Two-component adhesive, sealing or coating composition according to one of the claims 1 to 4, **characterized in that** the component A contains a constituent having epoxy groups as reactive groups, and further contains a latent curing agent which leads to a curing of the constituent containing the epoxy groups as soon as said latent curing agent gets in contact with water or an accelerator or an activator for the latent curing agent included in component B, and that
the component B contains a constituent carrying silane groups as reactive groups and furthermore an activator or accelerator for the latent curing agent included in the component A, so that
at the contact of the component A with the component B the curing of the component A takes place, and that at the contact of the component A, or the component B, respectively, with water a curing of the component A as well as a curing of the component B takes place.

11. Two-component adhesive, sealing or coating composition according to one of the claims 1 to 10, **characterized in that** the component A and/or the component B contain at least one further constituent which is selected from the group of materials comprising the following components:
binders,
plasticizers,
filling materials selected from the group comprising silicic acid derivatives, gypsum, talcum, metal powder, chalk, kaolin, active carbon or carbon black, as well as organic filling materials,
thixotropic agents selected from the group comprising bentones, carbon black, silicic acid derivatives, precipitated chalks, polyvinylchloride, urea derivatives, or acrylic derivatives,
dyestuffs and/or pigments, and
further additives that improve the application properties, the storability of the separately packed components A and B, or the durability of the cured adhesion, sealing or coating composition.

12. Two-component adhesive, sealing or coating composition according to one of the claims 1 to 11, **characterized in that** the component A as well as the component B are flowable at room temperature and that preferably the component A and the component B have a similar viscosity at room temperature.

13. Use of the two-component adhesive, sealing or coating composition according to one of the claims 1 to 12, **characterized in that**
the component A is mixed with the component B and that said mixture is applied to the substrate to be glued, sealed or coated,
or that first a layer of the component A and thereon a layer of component B, or first a layer of the component B and thereon a layer of the component A are applied,
or that for the gluing of a substrate surface 1 with a substrate surface 2, the component A is applied to the substrate surface 1 and the component B is applied to the substrate surface 2 and the two surfaces to be glued are brought in contact with each other.

## Revendications

1. Masses adhésives, d'étanchéité ou de revêtement à deux composants, exemptes de composants solides possédant un pouvoir d'échange d'ions, la masse comprenant, emballés séparément, le composant A et un composant B qui, séparés l'un de l'autre, sont stables à l'entreposage mais, lorsque le composant A est mis en contact avec le composant B, il se produit un durcissement de la masse,
dans lesquelles
le composant A contient au moins un constituant présentant des groupes réactifs qui conditionnent une réticulation du composant A, dès que ce dernier est mis en contact avec au moins un constituant du composant B et/ou avec de l'eau,
**caractérisées en ce que**
le composant B contient le constituant qui opère la réticulation du composant A et en outre au moins un constituant présentant des groupes réactifs provoquant une réticulation du composant B, dès que celui-ci est mis en contact avec de l'eau ou, éventuellement, avec un constituant contenu dans le composant A, et
dans lesquelles
les groupes réactifs même du au moins un constituant du composant A lui-même conduisent à une réticulation du composant A dès que ces groupes entrent en contact avec de l'eau ou
que les groupes réactifs du au moins un constituant du composant A ne sont pas eux-mêmes capables de provoquer la réaction de réticulation avec de l'eau, auquel cas toutefois le composant A contient en outre un durcisseur latent, qui est activé par contact avec de l'eau, par exemple par libération d'un durcisseur correspondant, le durcisseur activé ou libéré provoquant, par réaction avec les groupes réactifs du constituant, une réticulation du composant A, et **en ce que**
dans le composant B, les groupes réactifs du constituant correspondant conduisent aussi à une réticulation du composant B, dès que ces groupes réactifs sont mis en contact avec de l'eau ou que les groupes réactifs du composant B eux-mêmes ne sont pas davantage aptes à une réaction de réticulation dès qu'ils entrent en contact avec de l'eau, auquel cas, alors, le composant B contient lui aussi en outre un durcisseur latent, qui est activé au contact de l'eau et peut ainsi réagir avec les groupes réactifs du composant B et conduire ainsi à une réticulation du composant B, et **en ce que**
l'eau qui opère la réticulation du composant A et la réticulation du composant B est l'humidité ambiante.

2. Masses adhésives, d'étanchéité ou de revêtement à deux composants selon la revendication 1, **caractérisées en ce que** le constituant contenu dans le composant B, et qui conduit à une réticulation du constituant du composant A présentant des groupes réactifs lors du contact du composant A avec le composant B, constitue un durcisseur ou un durcisseur latent pour les groupes réactifs du composant A, ou que ce constituant contenu dans le composant B est un activateur d'un constituant contenu dans le composant A, et que
le composant A contient aussi un durcisseur ou un durcisseur latent pour les groupes réactifs du constituant correspondant du composant B ou un activateur d'un constituant présent dans le composant B, de sorte qu'il se produit une réticulation du composant B dès que celui-ci est mis en contact avec le composant A.

3. Masses adhésives, d'étanchéité ou de revêtement à deux composants selon l'une quelconque des revendications 1 à 2, **caractérisées en ce que** le composant A et/ou le composant B contien(nen)t un constituant qui, seul, en interaction avec l'humidité ambiante, en interaction avec un durcisseur ou un durcisseur latent et/ou en interaction avec un autre composé, contenu dans l'autre composant, conduit à une réticulation, ou une autoréticulation, des groupes réactifs du constituant présentant ces radicaux de l'autre des deux composants A et B précités.

4. Masses adhésives, d'étanchéité ou de revêtement à deux composants selon l'une quelconque des revendications 1 à 3, **caractérisées en ce que** les groupes réactifs qui, au contact de l'eau, ou au contact d'un durcisseur libéré par l'eau, qui opèrent la réticulation du composant A et/ou la réticulation du composant B, et qui sont liés au constituant correspondant du composant A, et respectivement au constituant correspondant du composant B, sont choisis dans le groupe formé par des radicaux isocyanate, des radicaux isocyanate bloqués, des radicaux silane, des radicaux d'anhydride d'acide ou des radicaux époxyde, combinés à un durcisseur pour époxy pouvant être activé par l'eau et des combinaisons de deux ou plus de deux des radicaux cités.

5. Masses adhésives, d'étanchéité ou de revêtement à deux composants selon l'une des revendications 1 à 4, **caractérisées en ce que**
le composant A contient un constituant présentant des radicaux isocyanate libres, et que le composant B contient en tant que groupes réactifs des radicaux silane, et contient en outre un composé fournissant les atomes d'hydrogène réactifs et qui, lors du contact du composant A avec le composant B, opère la réticulation du composant A par réaction des radicaux isocyanate libres qu'il contient avec les atomes d'hydrogène réactifs du composant B, et que le composé du composant B fournissant les atomes d'hydrogène réactifs est une amine primaire ou secondaire ou un composé présentant des radicaux hydroxyle libres, et que
les groupes réactifs contenus dans le composant B sont des radicaux silane, des radicaux silane terminaux, liés à un copolymère, de préférence un polyuréthanne correspondant, et que
le composant A contient en outre un constituant, par exemple un durcisseur ou un activateur, qui provoque une réticulation du composant B par réaction des radicaux silane avec ce constituant ou par réaction d'un durcisseur latent contenu dans le composant B avec ce constituant du composant A.

6. Masses adhésives, d'étanchéité ou de revêtement à deux composants selon l'une quelconque des revendications 1 à 4, **caractérisées en ce que**
le composant A contient un constituant présentant des radicaux isocyanate libres, et qui est un polyuréthanne comportant des radicaux isocyanate terminaux liés à des restes aliphatiques ou aromatiques, et que le composant A contient en outre un composé (1), et que
le composant B contient également un constituant présentant des radicaux isocyanate libres et est de préférence un polyuréthanne comportant des radicaux isocyanate terminaux liés à des restes aliphatiques ou des restes aromatiques et contient en outre un composé (2), et que
lors du contact du composant A avec le composant B, le composé (1) réagit avec le composé (2) pour former un constituant hautement réactif qui provoque la réticulation du constituant du composant A présentant des groupes isocyanate libres et la réticulation du constituant du composant B présentant des groupes isocyanate libres, et lorsque le composé (1) est un catalyseur et que le composé (2) est un catalyseur, le catalyseur (1) réagit avec le catalyseur (2) pour former un catalyseur hautement réactif.

7. Masses adhésives, d'étanchéité ou de revêtement à deux composants selon l'une quelconque des revendications 1 à 4, **caractérisées en ce que**
le composant A et le composant B contiennent tous deux un constituant présentant des radicaux isocyanate libres, mais que les radicaux isocyanate libres contenus dans le composant A possèdent une réactivité inférieure à celle des radicaux isocyanate libres contenus dans le composant B, et que le constituant correspondant du composant A est un polyuréthanne comportant des radicaux isocyanate terminaux liés à des restes aliphatiques, et le constituant correspondant du composant B est un polyuréthanne comportant des radicaux isocyanate terminaux liés à des restes aromatiques, et que
le composant A contient en outre un durcisseur latent qui, au contact d'un composé contenu dans le composant B, active le durcisseur latent, et que
le composant B contient en outre le composé indispensable à l'activation du durcisseur du composant A, de sorte que
lors du contact du composant A avec le composant B, le composant A est réticulé et qu'il s'ensuit en outre une réticulation tant du composant A que du composant B, dès que ces composants entrent en contact avec de l'eau.

8. Masses adhésives, d'étanchéité ou de revêtement à deux composants selon quelconque l'une des revendications 1 à 4, **caractérisées en ce que**
le composant A contient un constituant présentant des radicaux isocyanate libres, et que le composant B présente en tant que groupes réactifs des radicaux époxy et également des radicaux hydroxyle, qui opèrent la réticulation des radicaux isocyanate libres du constituant correspondant du composant A, que le composant B contient un système de résine époxy contenant des radicaux hydroxy, et que le composant B contient en outre un durcisseur latent provoquant une réticulation du constituant contenant les radicaux époxy, dès que celui-ci est mis en contact avec de l'eau, ledit durcisseur latent étant une aldimine, une cétimine ou une oxazolidine, et que
le composant A contient en outre un accélérateur ou un activateur pour le durcisseur latent contenu dans le composant B, pour la réticulation du constituant contenant les radicaux époxy, de sorte que
lors du contact du composant A avec le composant B, il se produit un durcissement du composant A, et il se produit également le durcissement du composant B par l'accélérateur ou l'activateur contenu dans le composant A pour le durcisseur latent du composant B, et que
lors du contact du composant A et du contact du composant B avec de l'eau, il se produit à la fois un durcissement du composant A et un durcissement du composant B.

9. Masses adhésives, d'étanchéité ou de revêtement à deux composants selon l'une quelconque des revendications 1 à 4, **caractérisées en ce que**
le composant A contient un constituant présentant en tant que groupes réactifs des radicaux silane, et que
le composant B contient un constituant présentant en tant que groupes réactifs des radicaux époxy et un constituant qui, au contact du composant A, conduit à un durcissement du constituant portant les radicaux silane du composant A, et que le composant B contient en outre un durcisseur latent qui conduit à une réticulation du constituant contenant les radicaux époxy, dès que ce durcisseur latent entre en contact avec de l'eau, et que
le composant A contient en outre un constituant qui agit comme accélérateur ou activateur du durcisseur latent du composant B, et que
lors du contact du composant A avec le composant B, il se produit un durcissement du composant A et un durcissement du composant B par l'accélérateur ou l'activateur contenu dans le composant A pour le durcisseur latent du composant B, et qu'au contact de l'eau, il se produit tant un durcissement du composant A qu'un durcissement du composant B.

10. Masses adhésives, d'étanchéité ou de revêtement à deux composants selon l'une des revendications 1 à 4, **caractérisées en ce que** le composant A contient un constituant présentant en tant que groupes réactifs des radicaux époxy, et contient en outre un durcisseur latent qui provoque une réticulation du constituant contenant les radicaux époxy dès que ce durcisseur latent entre en contact avec de l'eau ou un activateur ou accélérateur contenu dans le composant B pour le durcisseur latent, et que
le composant B contient un constituant portant en tant que groupes réactifs des radicaux silane, et contient en outre un activateur ou un accélérateur pour le durcisseur latent contenu dans le composant B, de sorte que
lors du contact du composant A avec le composant B, il se produit le durcissement du composant A, et qu'au contact du composant A, et/ou du composant B, avec de l'eau, il se produit tant un durcissement du composant A qu'un durcissement du composant B.

11. Masses adhésives, d'étanchéité ou de revêtement à deux composants selon l'une des revendications 1 à 10, **caractérisées en ce que** le composant A et/ou le composant B contien(nen)t au moins un autre constituant choisi dans le groupe de matériaux couvrant les composants suivants:
un liant,
un plastifiant,
des charges, choisies dans le groupe formé par des dérivés de l'acide silicique, le gypse, le talc, des poudres métalliques, la craie, le kaolin, le charbon actif ou le noir de fumée, ainsi que des charges organiques,
un agent thixotrope, choisi dans le groupe formé par la bentonite, le noir de fumée, des dérivés de l'acide silicique, de la craie précipitée, du poly(chlorure de vinyle), des dérivés d'urée ou des dérivés acryliques,
des colorants et/ou des pigments, et
d'autres additifs, qui améliorent les propriétés d'application, la conservation des composants A et B emballés séparément ou la résistance des masses adhésives, d'étanchéité ou de revêtement après durcissement.

12. Masses adhésives, d'étanchéité ou de revêtement à deux composants selon l'une des revendications 1 à 11, **caractérisées en ce que** tant le composant A que le composant B sont fluides à température ambiante et que, à température ambiante, le composant A et le composant B présentent une viscosité similaire.

13. Utilisation des masses adhésives, d'étanchéité ou de revêtement à deux composants selon l'une quelconque des revendications 1 à 12, **caractérisée en ce que**
l'on mélange le composant A au composant B et on applique ce mélange sur le substrat à coller, à étancher ou à recouvrir,
ou bien on applique d'abord sur le substrat une couche du composant A, puis on applique par-dessus une couche du composant B, ou bien on applique d'abord une couche du composant B et ensuite une couche du composant A,
ou bien, lorsque l'on colle une surface de substrat 1 à une surface de substrat 2, on applique le composant A sur la surface de substrat 1 et le composant B sur la surface de substrat 2, et l'on met en contact les deux surfaces de substrat à coller.
